# EUROPEAN PATENT SPECIFICATION

(11) **EP 1 672 817 B1**
(45) Date of publication and mention of the grant of the patent: **17.09.2008**
(21) Application number: 04293039.6
(22) Date of filing: 17.12.2004
(51) Int. Cl.: H04B 7/04, H01Q 1/22, H04B 1/38

(54) **Portable device with antenna diversity**
Tragbare Vorrichtung mit Antennendiversität
Dispositif portable avec diversité d'antennes

(43) Date of publication of application: 21.06.2006
(73) Proprietor: Alcatel Lucent, 75008 Paris (FR)
(72) Inventor: Buné, Paul A. M., 70806 Kornwestheim (DE)
(74) Representative: Schmidt, Werner Karl

(56) References cited:
- EP-A- 1 124 337
- US-A1- 2002 101 377
- US-A1- 2003 022 637
- US-B1- 6 590 884

## Description

### Background of the invention

The invention relates to a set of modules suitable to be connected to a portable device, such as mobile phones, notebooks or the like, for enabling communication of the portable device with a wireless communications network.

Antenna diversity at portable devices like mobile phones, notebooks, etc., must provide a certain minimal distance between the different antennas in order to be effective in showing a better performance than single antenna solutions. Antenna diversity enables wireless communications in places, where single antenna transmitters/receivers are not able to set up a connection with the quality required. Furthermore, higher data rates may be possible. Future developments may include advanced antenna diversity techniques like MIMO (multiple input, multiple output).

It is known to provide antennas at separate points of a device, which form an integral part of the device and are directly linked internally by a fixed cable to the diverting transmitter or combining receiver. This requires the wireless transmitter and/or receiver together with its antennas to be tailored and semi-permanently fixed onto or partially into the portable device, which drastically reduces flexibility, exchangeability and upgradeability.

EP 1 124 337 A2 discloses a switchless half-duplex transceiver front end used in mobile terminals. A circuitry comprising a first and second LNA is connected to first and second antennas, wherein one LNA is connected to the first and the second LNA is connected to the second antenna. Both LNAs are connected to an output port RX of the circuitry.

US 2002/0101377 A1 discloses a card-based diversity antenna structure including a card and at least two antenna elements. The card is adapted to be placed in an interface slot.

US 6,590,884 B1 discloses a mobile computing device being attached to a transceiver, which communicates via a radio interface with two access points of a communications network. The access points each comprise an antenna and a transceiver and are connected to a server via a data link.

US 2003/0022637 A1 discloses a personal computer having diversity antennas permanently arranged at an upper side portion of the display case.

### Object of the invention

It is the object of the invention to provide a wireless transmitter and/or receiver arrangement which overcomes the mentioned drawbacks.

### Short description of the invention

This object is achieved by a set of modules with the features of claim 1.
A transmitter and/or receiver is to be understood as a transmitter, a receiver, or a combined transmitter and/or receiver unit. According to the invention, this unit is split up into a primary transmitter and/or receiver module and at least one secondary transmitter and/or receiver module. Manufacturers of a portable device, like for example a notebook, can thus enable antenna diversity wireless communications to be used with their product without having to completely tailor a wireless transmitter and/or receiver to their product. They only have to provide standardized interfaces on their product, which is already often the case. A buyer of such an already existing or otherwise minimally adapted portable device can buy a set of modules, i.e. a standardized diversity antenna transmitter and/or receiver from a different manufacturer. There is no need to standardize the link between the primary wireless transmitter and/or receiver unit, i.e. the primary wireless transmitter and/or receiver module, with its diversity antenna units, i.e. the at least one secondary wireless transmitter and/or receiver module. In case of a change in the wireless network which is used, e.g. because of an upgrade or when traveling abroad, the primary wireless transmitter and/or receiver module and the at least one secondary wireless transmitter and/or receiver module, i.e. the wireless transmitter and/or receiver with its antenna diversity units, can be easily replaced by the user, without having to open the casing of the portable device and without having to use a tool, such as a screwdriver. Thus, flexibility, exchangeability and upgradeability of the wireless communication functionality of the portable device are increased enabling, at the same time, the advantageous exploitation of antenna diversity.

The data link between the primary wireless transmitter and/or receiver module and the secondary wireless transmitter and/or receiver module is embodied as separate cable, or separate short-distance wireless connection, in particular a Bluetooth connection, or infrared connection. As infrared connection a line-of-sight infrared connection may be used.

A separate power supply is not needed if the primary transmitter and/or receiver module and the at least one secondary wireless transmitter and/or receiver module are adapted to be coupled to different interface slots of a portable device and to be supplied with power by the respective interface slot they are coupled to.

Alternatively, if the primary transmitter and/or receiver module and the at least one secondary transmitter and/or receiver module are connected with each other by a cable, this cable may be used for supplying power to the secondary transmitter and/or receiver module and as the data link between the primary transmitter and/or receiver module and the at least one secondary transmitter and/or receiver module. Hence the secondary wireless transmitter and/or receiver module is adapted to be supplied with power by the main wireless transmitter and/or receiver module.

If at least some of the interface slots provided at the portable device are to be used for different purposes and are not to be used for connection of a transmitter and/or receiver module, it is advantageous, if at least one multi-port hub suitable for connecting to a standardized interface is provided and at least one module is coupled to the multi-port hub. Hence, the diversity antennas may be connected to the multi-port hub, for example a USB hub. Thus, the interface ports of the portable device stay available for other peripheral devices.

In a further embodiment, at least one attachment means is provided for attaching at least one secondary transmitter and/or receiver module to a portable device. For example, the secondary transmitter and/or receiver module may be clamped to the portable device. Thus, the at least one secondary transmitter and/or receiver module has a defined position at the portable device. Furthermore, it does not occupy an interface port of the portable device. This embodiment is particularly advantageous if the connection between the primary transmitter and/or receiver module and the at least one secondary transmitter and/or receiver module is established via a cable, which is used for data transfer as well as for supplying power to the at least one secondary transmitter and/or receiver module. Hence, at least some of the modules are suitable to be positioned at a portable device, e.g. via an attachment means or via an interface port.

The invention also relates to a portable device comprising a set of modules. None or minimal changes to a portable device have to be effected, if at least one wireless transmitter and/or receiver module is coupled to the portable device via a standardized interface slot or port. Preferably, at least one transmitter and/or receiver module is adapted to be coupled to a standardized port, such as a PCMCIA or USB port. Hence, in order to provide a portable device suitable to be connected to a set of modules enabling antenna diversity, a manufacturer only has to provide standardized ports, such as PCMCIA or USB at suitable positions on the product, which are suitable for the inventive wireless transmitter and/or receiver assembly comprising the antenna diversity arrangement to be connected thereto.

Advantageously, the at least one interface slot is used for carrying data traffic between at least one wireless transmitter and/or receiver module and the portable device. Hence, communication between the wireless transmitter and/or receiver assembly and the portable device is ensured.

In a preferred embodiment the primary wireless transmitter and/or receiver module and at least one secondary transmitter and/or receiver module are coupled to the portable device via different interface slots, wherein at least one interface slot is used for carrying data traffic and for supplying power to the module connected thereto, and further interface slots are at least used for supplying power to and/or for positioning of the respective module coupled thereto. Hence, in one scenario, each transmitter and/or receiver module is coupled to a standardized interface port of the portable device and all interface ports are used for data traffic exchange between the modules and the portable device, and the modules are supplied with power via the interface slot they are connected to. Alternatively, it is possible to have one module connected to the portable device via an interface slot, wherein that interface slot is used for carrying data traffic and for supplying the attached module with power. This module may then supply the other modules with power, wherein the other modules may still be connected to a standardized interface slot, however, the interface slot may only serve for mechanical positioning or fastening. In a further variant, the primary transmitter and/or receiver module is connected to a standardized interface slot, which is used for carrying data traffic and for supplying the primary transmitter and/or receiver module with power. The other modules are also plugged into standardized interface slots and are supplied with power via those interface slots and communicate with the portable device via the primary transmitter and/or receiver module. Further constellations are possible.

In a preferred embodiment the primary transmitter and/or receiver module is supplied with power by the portable device and the at least one secondary transmitter and/or receiver module is supplied with power by the primary transmitter and/or receiver module. This measure saves interface ports such that the interface ports may be used by different peripheral devices.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

- **Fig. 1**: shows the first embodiment of a portable device with antenna diversity;
- **Fig. 2**: shows a second embodiment of a portable device with antenna diversity.

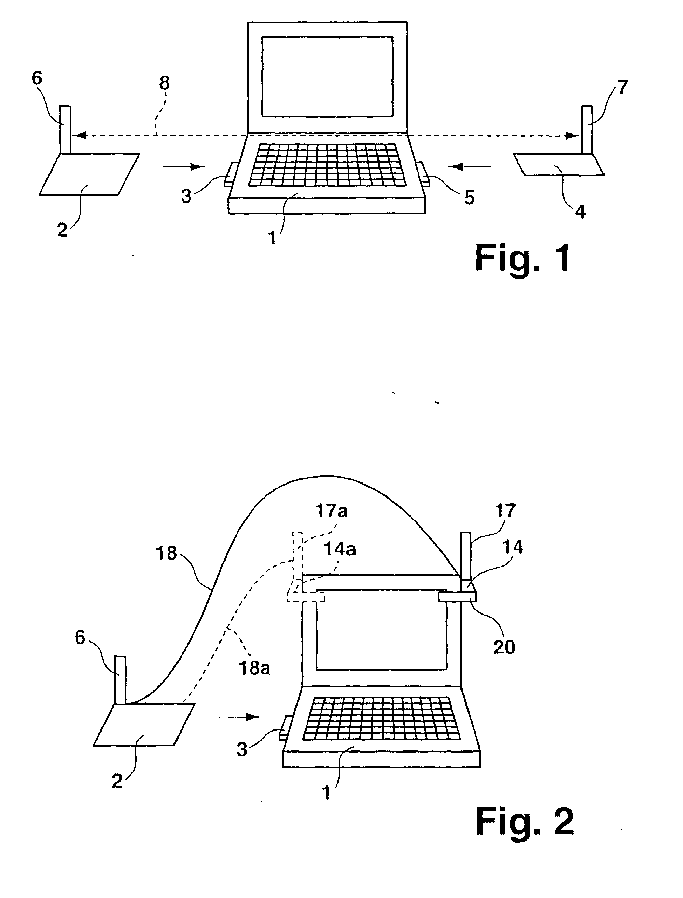

**Fig. 1** shows a portable device 1, embodied as a notebook, and a primary wireless transmitter and/or receiver module 2, which is coupled to a standardized interface slot 3 of the portable device 1, which interface slot 3 is embodied as PCMCIA slot. A secondary wireless transmitter and/or receiver module 4 is coupled to a second standardized interface slot 5 of the portable device 1, which second slot 5 is embodied as USB slot. The primary wireless transmitter and/or receiver module 2 includes a primary antenna 6, and the secondary wireless transmitter and/or receiver module 4 includes a diversity antenna 7. The primary wireless transmitter and/or receiver module 2 is supplied with power by the portable device 1 via the interface slot 3. It has two communication links, one via the interface slot 3 and one via a direct data link 8 external to the portable device 1. The data link 8 is embodied as line-of-sight infrared connection to the secondary wireless transmitter and/or receiver module 4. Alternatively, the data link 8 between the primary and the secondary transmitter and/or receiver module may be realized as a short-distance wireless link, for instance Bluetooth, or as an external cable. In the latter case, the power supply of the secondary wireless transmitter and/or receiver module 4 may be effected via the cable as well (via the primary wireless transmitter and/or receiver module 2). In the embodiment, however, the secondary wireless transmitter and/or receiver module 4 is supplied with power via the interface slot 5. The secondary wireless transmitter and/or receiver module has only one communication link, i.e. via the direct data link 8 to the primary wireless transmitter and/or receiver module. Note that the data link 8 between the primary and secondary transmitter and/or receiver modules can also be internal to the portable device, which may require special provisions to be available in the portable device.

**Fig. 2** also shows the portable device 1 and a primary wireless transmitter and/or receiver module 2, which is coupled to a standardized interface slot 3 of the portable device 1, wherein the interface slot 3 is embodied as PCMCIA slot. The primary wireless transmitter and/or receiver module 2 communicates with the portable device 1 via the slot 3 and is supplied with power via the slot 3 by the portable device 1. In this embodiment, the secondary wireless transmitter and/or receiver module 14 is not coupled to a standardized interface slot. The primary wireless transmitter and/or receiver module 2 has a primary antenna 6, and the secondary wireless transmitter and/or receiver module 14 has a diversity antenna 17. The primary and secondary transmitter and/or receiver modules 2, 14 communicate via a direct communication link 18, which in this case is embodied as cable. The cable is also used for supplying power to the secondary wireless transmitter and/or receiver module 14 from the primary wireless transmitter and/or receiver module 2. The secondary wireless transmitter and/or receiver module 14 is clamped to the portable device 1 via an attachment means 20. Thus, the secondary wireless transmitter and/or receiver module 14 is fastened to the portable device 1 at a predetermined location. Optionally, a further secondary wireless transmitter and/or receiver module 14a may be provided, which is also clamped to the portable device 1. A direct data link 18a external to the portable device is provided for connecting the primary wireless transmitter and/or receiver module 2 to the further secondary wireless transmitter and/or receiver module 14a, having a further diversity antenna 17a. The direct data link 18a is also embodied as cable, which is used for supplying power to the further secondary wireless transmitter and/or receiver module 14a.

## Claims

1. Set of modules (2, 4) suitable to be externally attached to a mobile phone, notebook or the like via an attachment means or via an interface port for enabling communication of the mobile phone, notebook or the like with a communications network, the set of modules (2, 4) comprising a primary wireless transmitter and/or receiver module (2) with a primary antenna (6), which primary module (2) is suitable for communicating with the mobile phone, notebook or the like (1) via an interface, the set of modules comprising at least one secondary wireless transmitter and/or receiver module (4, 14, 14a) with a diversity antenna (7, 17, 17a) and communicating with said primary wireless transmitter and/or receiver module (2) via a direct data link (8, 18, 18b), wherein the data link (8, 18, 18a) between the primary wireless transmitter and/or receiver module (2) and the secondary wireless transmitter and/or receiver module (4, 14, 14a) is embodied as separate cable, separate short-distance wireless connection, for instance Bluetooth connection, or infrared connection.

2. Set of modules according to claim 1, **characterized in that** the primary transmitter and/or receiver module (2) and the at least one secondary wireless transmitter and/or receiver module (4) are adapted to be coupled to different interface slots of a mobile phone, notebook or the like and to be supplied with power by the respective interface slot they are coupled to.

3. Set of modules according to claim 1, **characterized in that** at least one multi-port hub suitable for connecting to a standardized interface slot (3, 5) of a mobile phone, notebook or the like is provided, and at least one module (2, 4, 14, 14a) is coupled to the multi-port hub.

4. Set of modules according to claim 1, **characterized in that** at least one attachment means (20) is provided for attaching at least one secondary transmitter and/or receiver module (14, 14a) to a mobile phone, notebook or the like (1).

5. Mobile phone, notebook or the like (1), having wireless communication functionality, including a set of modules (2, 4) according to claim 1.

6. Mobile phone, notebook or the like according to claim 5, **characterized in that** at least one wireless transmitter and/or receiver module (2, 4) is coupled to the mobile phone, notebook or the like via a standardized interface slot (3, 5) of the mobile phone, notebook or the like (1).

7. Mobile phone, notebook or the like according to claim 6, **characterized in that** the at least one interface slot (3, 5) is used for carrying data traffic between at least one wireless transmitter and/or receiver module (2, 4) and the mobile phone, notebook or the like (1).

8. Mobile phone, notebook or the like according to claim 6 **characterized in that** the primary wireless transmitter and/or receiver module (2) and at least one secondary transmitter and/or receiver module (4) are coupled to the mobile phone, notebook or the like (1) via different interface slots (3, 5) of the mobile phone, notebook or the like (1), wherein at least one interface slot (3, 5) is used for carrying data traffic and for supplying power to the module (2, 4) connected thereto, and further interface slots (3, 5) are at least used for supplying power to and/or for positioning of the respective module (2, 4) coupled thereto.

9. Mobile phone, notebook or the like according to claim 5, **characterized in that** the primary wireless transmitter and/or receiver module (2) is supplied with power by the mobile phone, notebook or the like (1) and the at least one secondary wireless transmitter and/or receiver module (4, 14, 14a) is supplied with power by the primary wireless transmitter and/or receiver module (2).

## Patentansprüche

1. Satz von Modulen (2, 4), welche über ein Befestigungsmittel oder einen Schnittstellenport extern an einem Mobiltelefon, einem Notebook o. Ä. befestigt werden können, um die Kommunikation des Mobiltelefons, des Notebooks o. Ä. mit einem Kommunikationsnetz zu ermöglichen, wobei der Satz von Modulen (2, 4) ein primäres drahtloses Sender- und/oder Empfängermodul (2) mit einer primären Antenne (6) umfasst, wobei das primäre Modul (2) fähig ist, mit dem Mobiltelefon, dem Notebook o. Ä. (1) über eine Schnittstelle zu kommunizieren, wobei der Satz von Modulen mindestens ein sekundäres drahtloses Sender- und/oder Empfängermodul (4, 14, 14a) mit einer Diversity-Antenne umfasst, welches mit dem besagten primären drahtlosen Sender- und/oder Empfängermodul (2) über eine direkte Datenverbindung (8, 18, 18b) kommuniziert, wobei die Datenverbindung (8, 18, 18a) zwischen dem primären drahtlosen Sender- oder Empfängermodul (2) und dem sekundären drahtlosen Sender- oder Empfängermodul (4, 14, 14a) als ein separates Kabel, eine separate drahtlose Nahverbindung, zum Beispiel eine Bluetooth-Verbindung, oder eine Infrarot-Verbindung ausgeführt ist.

2. Ein Satz von Modulen nach Anspruch 1, **dadurch gekennzeichnet, dass** das primäre drahtlose Sender- und/oder Empfängermodul (2) und das mindestens eine sekundäre drahtlose Sender- und/oder Empfängermodul (4) an die verschiedenen Schnittstellenschlitze eines Mobiltelefons, eines Notebooks o. Ä. gekoppelt und über die jeweiligen Schnittstellenschlitze, an welche sie gekoppelt sind, mit Strom versorgt werden können.

3. Ein Satz von Modulen nach Anspruch 1, **dadurch gekennzeichnet, dass** mindestens ein Multiport-Hub, welcher für den Anschluss an einen standardisierten Schnittstellenschlitz (3, 5) eines Mobiltelefons, eines Notebooks o. Ä. geeignet ist, vorgesehen ist, und dass mindestens ein Modul (2, 4, 14, 14a) an den Multiport-Hub gekoppelt ist.

4. Ein Satz von Modulen nach Anspruch 1, **dadurch gekennzeichnet, dass** mindestens ein Befestigungsmittel (20) zum Befestigen von mindestens einem sekundären drahtlosen Sender- und/oder Empfängermodul (14, 14a) an einem Mobiltelefon, einem Notebook o. Ä. (1) vorgesehen ist.

5. Mobiltelefon, Notebook o. Ä. (1) mit drahtloser Kommunikationsfunktionalität, einschließlich eines Satzes von Modulen (2, 4) nach Anspruch 1.

6. Mobiltelefon, Notebook o. Ä, nach Anspruch 5, **dadurch gekennzeichnet, dass** mindestens ein drahtloses Sender- und/oder Empfängermodul (2, 4) über einen standardisierten Schnittstellenschlitz (3, 5) des Mobiltelefons, des Notebooks o. Ä. (1) an das Mobiltelefon, das Notebook o. Ä. gekoppelt ist.

7. Mobiltelefon, Notebook o. Ä. nach Anspruch 6, **dadurch gekennzeichnet, dass** der mindestens eine Schnittstellenschlitz (3, 5) benutzt wird, um Datenverkehr zwischen mindestens einem drahtlosen Sender- und/oder Empfängermodul (2, 4) und dem Mobiltelefon, dem Notebook o. Ä. (1) zu befördern.

8. Mobiltelefon, Notebook o. Ä. nach Anspruch 6, **dadurch gekennzeichnet, dass** das primäre drahtlose Sender- und/oder Empfängermodul (2) und mindestens ein sekundäres drahtloses Sender- und/oder Empfängermodul (4) über verschiedene Schnittstellenschlitze (3, 5) des Mobiltelefons, des Notebooks o. Ä. (1) an das Mobiltelefon, das Notebook o. Ä. (1) gekoppelt sind; wobei mindestens ein Schnittstellenschlitz (3, 5) benutzt wird, um Datenverkehr zu befördern und das daran angeschlossene Modul (2, 4) mit Strom zu versorgen, und weitere Schnittstellenschlitze (3, 5) mindestens benutzt werden, um das jeweilige daran angeschlossene Modul (2, 4) mit Strom zu versorgen und/oder zu positionieren.

9. Mobiltelefon, Notebook o. Ä. nach Anspruch 5, **dadurch gekennzeichnet, dass** das primäre drahtlose Sender- und/oder Empfängermodul (2) von dem Mobiltelefon, dem Notebook o. Ä. (1) mit Strom versorgt wird, und dass das mindestens eine sekundäre drahtlose Sender- und/oder Empfängermodul (4, 14, 14a) von dem primären drahtlosen Sender- und/oder Empfängermodul (2) mit Strom versorgt wird.

## Revendications

1. Ensemble de modules (2, 4) conçu pour être fixé extérieurement à un téléphone mobile, un ordinateur portable ou similaire par le biais de moyens de fixation ou par le biais d'un port d'interface pour permettre la communication du téléphone mobile, de l'ordinateur portable ou similaire avec un réseau de communication, l'ensemble de modules (2, 4) comprenant un module émetteur et/ou récepteur sans fil primaire (2) muni d'une antenne primaire (6), ledit module primaire (2) étant conçu pour communiquer avec le téléphone mobile, l'ordinateur portable ou similaire (1) par le biais d'une interface, l'ensemble de modules comprenant au moins un module émetteur et/ou récepteur sans fil secondaire (4, 14, 14a) muni d'une antenne à diversité (7, 17, 17a) et communiquant avec ledit module émetteur et/ou récepteur sans fil primaire (2) par le biais d'une liaison de données primaire (8, 18, 18b), la liaison de données (8, 18, 18a) entre le module émetteur et/ou récepteur sans fil primaire (2) et le module émetteur et/ou récepteur sans fil secondaire (4, 14, 14a) étant réalisée sous la forme d'un câble séparé, d'une connexion sans fil de courte distance, par exemple une connexion Bluetooth, ou d'une connexion par infrarouges.

2. Ensemble de modules selon la revendication 1, **caractérisé en ce que** le module émetteur et/ou récepteur sans fil primaire (2) et l'au moins un module émetteur et/ou récepteur sans fil secondaire (4) sont conçus pour être connectés à des connecteurs d'interface différents d'un téléphone mobile, ordinateur portable ou similaire et pour être alimentés en énergie par le connecteur d'interface correspondant auquel ils sont connectés.

3. Ensemble de modules selon la revendication 1, **caractérisé en ce qu'**il est prévu au moins un concentrateur à ports multiples pour être connecté à un connecteur d'interface normalisé (3, 5) d'un téléphone mobile, d'un ordinateur portable ou similaire, et au moins un module (2, 4, 14, 14a) est connecté au concentrateur à ports multiples.

4. Ensemble de modules selon la revendication 1, **caractérisé en ce qu'**il est prévu au moins un moyen de fixation (20) pour fixer au moins un module émetteur et/ou récepteur sans fil secondaire (14, 14a) à un téléphone mobile, un ordinateur portable ou similaire (1).

5. Téléphone mobile, ordinateur portable ou similaire (1), disposant d'une fonctionnalité de communication sans fil, comprenant un ensemble de modules (2, 4) selon la revendication 1.

6. Téléphone mobile, ordinateur portable ou similaire selon la revendication 5, **caractérisé en ce qu'**au moins un module émetteur et/ou récepteur sans fil (2, 4) est connecté au téléphone mobile, à l'ordinateur portable ou similaire par le biais d'un connecteur d'interface normalisé (3, 5) du téléphone mobile, de l'ordinateur portable ou similaire (1).

7. Téléphone mobile, ordinateur portable ou similaire selon la revendication 6, **caractérisé en ce que** l'au moins un connecteur d'interface normalisé (3, 5) est utilisé pour transporter un trafic de données entre au moins module émetteur et/ou récepteur sans fil (2, 4) et le téléphone mobile, l'ordinateur portable ou similaire (1).

8. Téléphone mobile, ordinateur portable ou similaire selon la revendication 6, **caractérisé en ce que** le module émetteur et/ou récepteur sans fil primaire (2) et l'au moins un module émetteur et/ou récepteur sans fil secondaire (4) sont connectés au téléphone mobile, à l'ordinateur portable ou similaire (1) par le biais de connecteurs d'interface (3, 5) différents du téléphone mobile, de l'ordinateur portable ou similaire (1), au moins un connecteur d'interface (3, 5) étant utilisé pour transporter le trafic de données et pour alimenter en énergie le module (2, 4) qui y est connecté, et les autres connecteurs d'interface (3, 5) étant au moins utilisés pour alimenter en énergie et/ou pour positionner le module (2, 4) correspondant qui y est connecté.

9. Téléphone mobile, ordinateur portable ou similaire selon la revendication 5, **caractérisé en ce que** le module émetteur et/ou récepteur sans fil primaire (2) est alimenté en énergie par le téléphone mobile, l'ordinateur portable ou similaire (1) et l'au moins un module émetteur et/ou récepteur sans fil secondaire (4, 14, 14a) est alimenté en énergie par le module émetteur et/ou récepteur sans fil primaire (2).
